(19) Europäisches Patentamt European Patent Office Office européen des brevets

(11) **EP 2 471 171 B1**

(12) **FASCICULE DE BREVET EUROPEEN**

(45) Date de publication et mention
de la délivrance du brevet:
**12.07.2017 Bulletin 2017/28**

(21) Numéro de dépôt: **10745653.5**

(22) Date de dépôt: **27.08.2010**

(51) Int Cl.:
*H02P 6/18* *(2016.01)* *H02P 6/182* *(2016.01)*
*H02P 6/185* *(2016.01)*

(86) Numéro de dépôt international:
**PCT/EP2010/062538**

(87) Numéro de publication internationale:
**WO 2011/023792 (03.03.2011 Gazette 2011/09)**

(54) **MÉTHODE ET ARRANGEMENT POUR DÉTERMINER LA POSITION D'UN ROTOR DANS UN MOTEUR BRUSHLESS OU DANS UN MOTEUR PAS À PAS.**

VERFAHREN UND ANORDNUNG ZUR BESTIMMUNG DER POSITION EINES ROTORS IN EINEM BÜRSTENLOSEN MOTOR ODER EINEM SCHRITTMOTOR

METHOD AND ARRANGEMENT FOR DETERMINING THE POSITION OF A ROTOR IN A BRUSHLESS MOTOR OR IN STEPPER MOTOR

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **27.08.2009 CH 13312009**

(43) Date de publication de la demande:
**04.07.2012 Bulletin 2012/27**

(73) Titulaire: **Micro-Beam SA**
**1400 Yverdon-les-Bains (CH)**

(72) Inventeurs:
• **CARDOLETTI, Laurent**
**CH-1844 Villeneuve (CH)**
• **BIELER, Thierry**
**CH-1112 Echichens (CH)**

• **KOECHLI, Christian**
**CH-1462 Yvonnand (CH)**
• **TINGUELY, Simon**
**CH-1007 Lausanne (CH)**
• **FLEURY, Christian**
**CH-1585 Cotterd (CH)**

(74) Mandataire: **Saam, Christophe**
**P&TS SA**
**Av. J.-J. Rousseau 4**
**P.O. Box 2848**
**2001 Neuchâtel (CH)**

(56) Documents cités:
**GB-A- 2 455 123 US-A- 4 450 396**
**US-A- 5 448 149 US-B1- 6 555 977**

**Description**

Domaine de l'invention

La présente invention concerne le domaine de l'alimentation et du contrôle de position du rotor dans les moteurs tournants, en particulier les moteurs synchrones (moteur brushless ou moteur pas à pas). La présente invention concerne en particulier une méthode et un arrangement pour déterminer la position du rotor dans un tel moteur, sans employer d'encodeur additionnel.

Art antérieur

Pour contrôler de manière optimale l'alimentation d'un moteur, la position rotorique doit être connue ; cette position rotorique peut être obtenue avec un ou des capteurs de position.

On connaît aussi des technologies sans capteurs (« sensorless ») qui sont basées sur la mesure de paramètres électriques et/ou de paramètres moteurs variant en fonction de la position du rotor. Ces solutions permettent de se dispenser de capteur.

Les technologies sans capteurs traditionnelles utilisent:

- la tension induite de mouvement qui varie en fonction de la vitesse et de la position du rotor ; ou

- les inductances propres de phase qui varient en fonction de la position rotorique

US6555977 concerne une méthode et un dispositif pour détecter la position d'un rotor d'un moteur électrique à l'aide du passage à zéro ou du changement de la polarité de l'inductance mutuelle associée au moteur. Un signal de tension peut être mesuré dans une phase flottante du moteur tandis que les autres deux phases sont alimentées. Ce signal de tension comprend trois composantes : la tension induite du mouvement (filtrée par un filtre à baisses fréquences, la tension d'excitation à haute fréquence (filtrée par un filtre à hautes fréquences) et la tension induite par l'inductance mutuelle qui est gardée.

US5448149 concerne une méthode et un dispositif pour déterminer la position d'un rotor moteur à reluctance synchrone et sinusoïdale. Une première phase n'est pas alimentée pour un certain délai en correspondance du passage à zéro de son courant de phase et dans le même délai les autres deux phases sont couplées à un signal d'excitation sinusoïdal. Une tension induite est ainsi lue dans la première phase et un courant de phase est détecté dans les autres phases. La position du rotor est ensuite calculée à l'aide de la tension induite, du courant de phase des autres phases et de la fréquence d'excitation.

US4450396 concerne une machine synchrone contrôlée électroniquement dans laquelle les enroulements du stator permettent que l'inductance mutuelle entre les enroulements du stator soit variable de façon sensiblement sinusoïdale en fonction de la position angulaire du rotor. Une tension induite est mesurée sur des enroulements additionnels ou sur les enroulements du stator afin de déduire la position relative entre le stator et le rotor.

La présente invention vise à utiliser un autre principe pour déterminer la position rotorique, et pour en déduire la vitesse, l'accélération, le nombre de tours effectués, voire le couple instantané etc.

Pour résoudre ce but, l'invention part de la constatation que l'inductance mutuelle entre les bobines du stator varie en fonction de la position angulaire du rotor. Cette variation est souvent faible, et a très peu d'influence dans le fonctionnement d'un moteur. Par conséquent, elle a très longtemps été négligée.

Des mesures et des calculs effectués dans le cadre de l'invention ont cependant montré que même de très légères variations d'inductances mutuelles en fonction de la position rotorique peuvent avantageusement être exploitées pour déterminer de manière indirecte la position rotorique du moteur.

Dans un mode de réalisation avantageux, l'inductance mutuelle est déterminée par mesure de la tension induite par une phase d'alimentation dans une autre phase d'alimentation.

La présente invention concerne donc une méthode pour déterminer la position d'un rotor dans un moteur brushless ou dans un moteur pas à pas, suivant la revendication 1.

La présente invention concerne également un arrangement pour déterminer la position du rotor et pour alimenter un moteur brushless ou pas à pas, suivant la revendication 19.

Dans un mode de réalisation, la tension induite par inductance mutuelle est mesurée en deux instants différents ; la méthode comporte alors une étape de calcul de la différence de tension induite entre les deux dits instants. Cette méthode de calcul différentiel permet de s'affranchir d'erreur d'offset et/ou de la composante de tension induite de mouvement.

Avantageusement, la tension induite est mesurée une première fois pendant une période ON d'application de ladite tension à la ou aux phases alimentées, et une seconde fois pendant une période OFF de modification de ladite tension. Par exemple, la tension induite peut être mesurée en fin de période d'application de ladite tension à la ou aux phases alimentées (période ON), puis une nouvelle fois en fin de période d'interruption ou d'inversion de la tension appliquée (période OFF).

Ce principe de mesure s'applique aussi bien à des moteurs triphasés qu'à des moteurs biphasés. Dans un mode de réalisation adapté à un moteur triphasé, une tension et/ou un courant sont appliqués simultanément à deux phases alimentées du moteur, et la tension induite est mesurée dans la troisième phase non alimentée du moteur. Dans un autre mode de réalisation adapté à un moteur triphasé, une tension et/ou un courant est appliqué simultanément à une seule des phases du moteur, et la tension induite est mesurée dans une des autres phases non alimentée du moteur, ou dans les deux autres phases non alimentées.

Dans un autre mode de réalisation adapté à un moteur triphasé avec neutre, la tension induite est mesurée entre une phase non alimentée et le neutre ou un neutre virtuel.

Le procédé de l'invention peut aussi être adapté à des moteurs biphasés.

Dans un mode de réalisation adapté à un moteur triphasé avec ou sans neutre, une première tension et/ou un premier courant sont appliqués à une première paire de phases ; la tension induite par inductance mutuelle dans la troisième phase non alimentée du moteur est mesurée ;

une deuxième tension et/ou un deuxième courant sont ensuite appliqués à une deuxième paire de phases ; la tension induite par inductance mutuelle dans la phase non alimentée du moteur est mesurée ;

la position du rotor est ensuite déterminée à partir de la tension induite dans chaque phase non alimentée au cours des deux étapes ci-dessus.

Avantageusement, la tension et/ou le courant appliqué à la phase alimentée, ou aux phases alimentées, est modulé en largeur d'impulsions (PWM) avec des périodes ON durant lesquelles au moins une phase est alimentée, et des périodes OFF durant lesquelles lesdites phases voient leur alimentation interrompue ou inversée. La tension induite est alors avantageusement mesurée pendant chaque période ON et pendant chaque période OFF, la méthode incluant une étape de calcul de la différence de tension induite entre la période ON et la période OFF.

D'autres modes de réalisation avantageux apparaîtront à la lecture de la description illustrée par les figures annexées qui montrent :

La figure 1 montre le circuit parcouru par le courant dans un arrangement comportant un moteur triphasé et un circuit de commutation pour alimenter sélectivement et alternativement une ou plusieurs phases dudit moteur. Dans l'instant illustré sur la figure, deux transistors sont en conduction.

La figure 2 montre le circuit parcouru par le courant dans l'arrangement de la figure 1, à un instant dans lequel les deux transistors sont bloqués.

La figure 3 montre le circuit parcouru par le courant dans l'arrangement de la figure 1, à un instant où l'un des deux transistors (le transistor inférieur sur la figure) est bloqué.

La figure 4a est un chronogramme montrant la manière dont le courant peut être limité avec deux transistors.

La figure 4b est un chronogramme montrant la manière dont le courant peut être limité avec le transistor inférieur.

La figure 5 est un chronogramme montrant l'évolution temporelle des trois courants de phase.

La figure 6 illustre la tension u3 mesurée aux bornes de la phase non alimentée pour le moteur arrêté, lorsque les phases 1 et 2 du moteur sont alimentées en série avec un courant i1 contrôlé par modulation de largeur d'impulsion sur 2 transistors.

La figure 7 représente les différents éléments modélisant les phases du moteur, soit les résistances de phase, les inductances propres, les inductances mutuelles entre phases et les tensions induites de mouvement pour un couplage en étoile.

La figure 8 montre les périodes ON et OFF d'alimentation des phases 1 et 2 ainsi que les tensions $u_{3\_on}$ et $u_{3\_off}$. et les courants $i_{1\_on}$ et $i_{1\_OFF}$ dans les deux phases alimentées.

La figure 9 présente à titre d'exemple la structure d'un moteur brushless à 4 pôles et 6 dents.

La figure 10 présente un moteur dit à bobinage dans l'entrefer ; le bobinage est placé dans l'entrefer sans dents.

La figure 11 est un chronogramme qui illustre la mesure des inductances mutuelles L23_1, L31_2 et L12_3 lorsqu'un moteur triphasé du type de la figure 9 tourne lentement à vitesse sensiblement constante

La figure 12 illustre un circuit permettant de réaliser un neutre artificiel.

Exemples de mode de réalisation

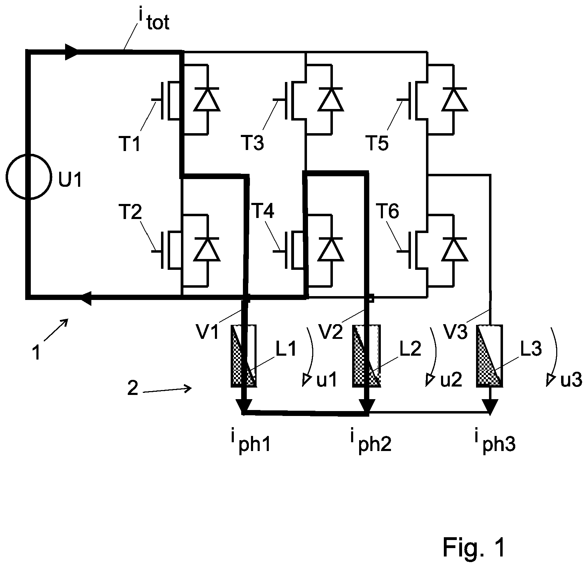

Le premier exemple de réalisation décrit en relation avec les figures 1 à 6 s'applique à un moteur triphasé avec une commutation à 120° conventionnelle et une limitation de courant par modulation de largeur d'impulsions (PWM, pulse width modulation). Dans cet exemple, le moteur 2 est un moteur synchrone à aimant permanent avec trois phases L1, L2, L3 connectées en étoile. L'arrangement comporte aussi un circuit de commutation 1 pour alimenter sélectivement et alternativement les phases du moteur 2 avec une tension et/ou un courant fourni par une source de courant ou de tension U1. Le circuit de commutation comporte un pont comportant 6 transistors T1 à T6.

Le courant dans chacune des phases L1 à L3 est réglé en appliquant une modulation de largeur d'impulsion (MLI, ou en anglais PWM) directement sur les transistors T1 à T6. Cette solution conventionnelle permet de minimiser l'investissement en électronique et exploite au mieux les composants du système. On applique donc une tension et/ou un courant modulé dans chaque phase L1 à L3 alimentée du moteur, afin de contrôler sa vitesse et/ou son couple ; la tension et le courant appliqués incluent ainsi une composante haute fréquence qui dépend de la modulation effectuée.

La vitesse du moteur est contrôlée en limitant le courant, par exemple en bloquant les transistors en conduction pendant une durée variable/ avec un rapport de cycle variable et ceci à une fréquence fixe élevée. On désignera par le terme "transistor de limitation" le ou les transistors dont le temps de conduction est modulé.

La figure 1 représente un des six états de conduction des transistors du pont correspondant à une séquence de commutation à 120°. Dans cet état, les deux transistors T1 et T4 sont conducteurs ; les autres transistors sont bloqués.

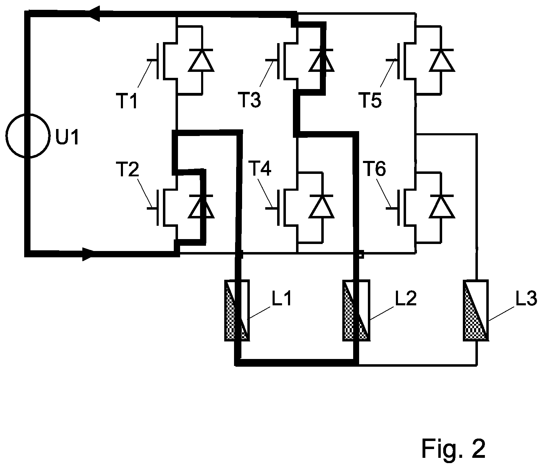

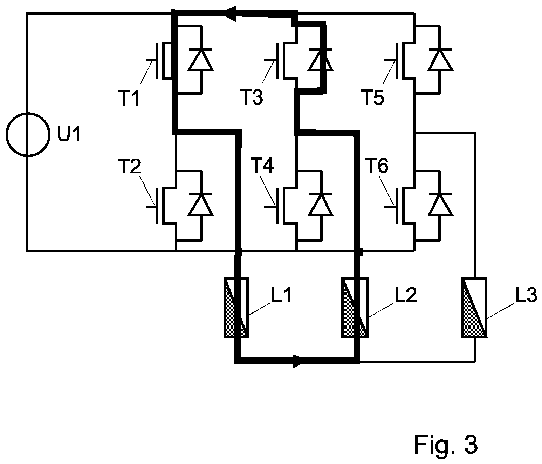

La figure 2 décrit le parcours suivi par le courant lorsque, en partant de l'état illustré sur la figure 1, on bloque les deux transistors T1 et T4. La figure 3 illustre ce parcours lorsque l'on bloque uniquement le transistor du bas T4. Le courant de phase $i_{ph}(t)$ ne change pas de signe et évolue de manière continue. Le courant total $i_{tot}(t)$ est par contre discontinu. Il change de signe lorsque la limitation se fait sur les deux transistors T1 et T4 alors qu'il s'annule lorsqu'un seul transistor T4 est bloqué.

Une troisième variante non illustrée est possible, dans laquelle on utilise uniquement le transistor supérieur T1 pour la limitation.

Le circuit de commutation est donc agencé pour alimenter les trois phases L1, L2, L3 du moteur avec des séquences d'états de conduction successifs en fonction de la paire de transistors conducteurs en chaque instant. Le circuit de commutation permet en outre de moduler/limiter le courant en bloquant le transistor du haut (T1 sur l'exemple) et/ou le transistor du bas (T4 dans cet exemple).

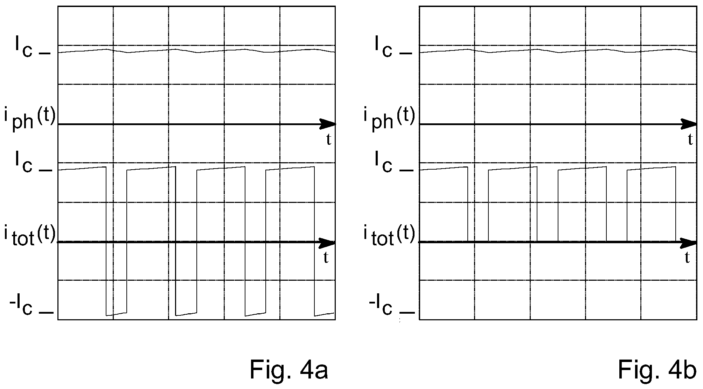

La figure 4a représente l'évolution du courant total $i_{tot}(t)$ et celle du courant de phase $i_{ph}(t)$ pour une commande en courant avec deux transistors de limitation, comme dans l'exemple de la figure 2. La figure 4b représente l'évolution du courant total et celle du courant de phase pour une commande en courant avec deux transistors de limitation, comme dans l'exemple de la figure 3.

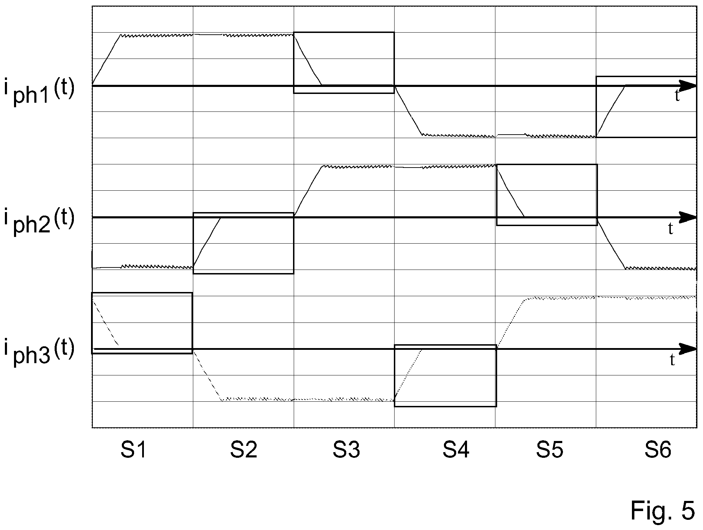

La figure 5 montre les trois courants de phase $i_{ph1}(t)$, $i_{ph2}(t)$ et $i_{ph3}(t)$ qui peuvent être ainsi générés avec une séquence de six états de commutation successifs S1 à S6. Pour chaque commutation, une phase sera alimentée avec un courant positif, une phase avec un courant négatif et une phase est momentanément non alimentée. Les instants durant lesquels une phase est non alimentée sont illustrés entourés par un rectangle sur la figure. Cette phase non alimentée est utilisée pour mesurer la tension induite de mouvement, c'est-à-dire la tension induite par couplage mutuel avec les autres phases. Elle permet notamment de détecter les passages par zéro de la tension induite de mouvement.

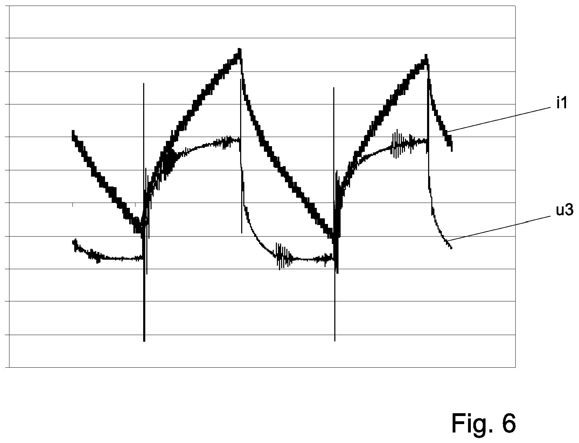

L'invention exploite avantageusement (mais pas nécessairement) ce mode de commande à 120° avec limitation de courant par modulation de largeur d'impulsion. A titre d'exemple, nous considérons sur la figure 6 une des 6 séquences de commutation correspondant aux phases 1 et 2 du moteur alimentées en série avec un courant $i_1$ contrôlé par modulation de largeur d'impulsion sur 2 transistors.

La courbe inférieure, presque rectangulaire, correspond à la tension $u_3$ mesurée aux bornes de la phase 3 non alimentée pour le moteur arrêté. La courbe supérieure en dents de scie illustre le courant de phase i1, égal dans cet état à $i_{ph1}$ et à $-i_{ph2}$.

La tension $u_3$ mesurée aux bornes de la phase 3 est pratiquement proportionnelle à la dérivée du courant $i_1$ circulant dans les phases 1 et 2 alimentées. Cette tension est donc produite par couplage par inductance mutuelle entre les phases 1 et 2 momentanément alimentées et la phase 3 momentanément non alimentée.

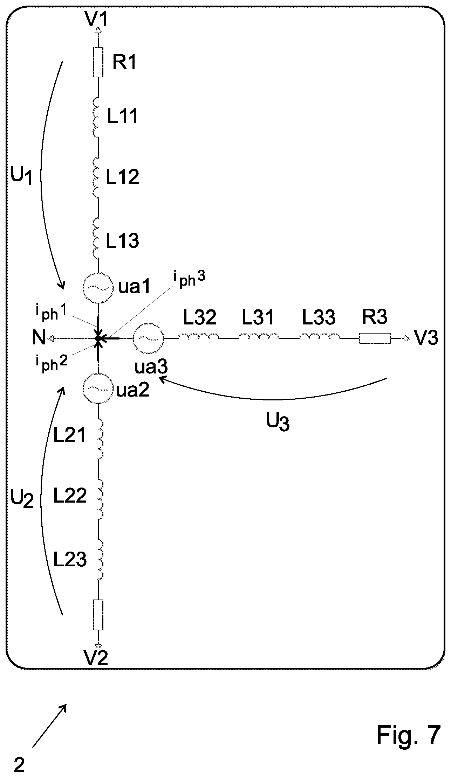

Une mise en équation permet de mieux comprendre l'origine de la tension mesurée. La figure 7 représente les différents éléments modélisant les phases du moteur 2, soit les résistances de phase R1 à R3, les inductances propres Lii, les inductances mutuelles Lij entre phases et les tensions induites de mouvement $U_{ai}$ pour un couplage en étoile.

La tension $u_3$ sur la phase 3 non alimentée est la somme des composantes suivantes:

$$u_3 = R_3 \cdot i_3 + L_{33} \cdot \frac{di_3}{dt} + L_{31} \cdot \frac{di_1}{dt} + L_{32} \cdot \frac{di_2}{dt} + u_{a3}$$

Lorsque la phase 3 n'est pas alimentée, on a $i_3=0$. Les courants $i_{ph1}$ et $i_{ph2}$ injectés dans les phases 1 et 2 sont identiques mais de valeurs opposées : $i_1 = i_{ph2} = -i_{ph1}$. On obtient donc :

$$u_3 = (L_{31} - L_{32}) \cdot \frac{di_1}{dt} + u_{a3}$$

A l'arrêt, pour une vitesse nulle, la tension induite $u_{a3}$ est nulle. En mouvement, lorsque le moteur tourne, on peut s'affranchir de la tension induite de mouvement $u_{a3}$ en calculant la différence de tension induite en deux instants distincts.

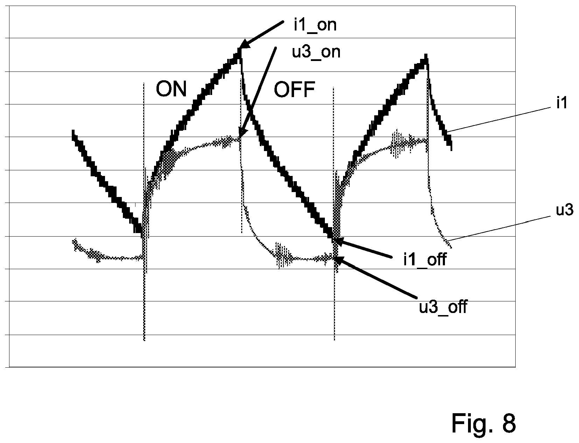

Dans un mode de réalisation préférentiel, on mesure la tension induite $u_{3\_on}$ respectivement $u_{3\_off}$ aux bornes de la phase 3 en fin des périodes ON et OFF d'alimentation des phases puis on calcule la différence entre ces deux tensions $u_{3\_on}$ et $u_{3\_off}$. La figure 8 montre les périodes ON et OFF d'alimentation des phases 1 et 2 ainsi que les tensions $u_{3\_on}$ et $u_{3\_off}$ et les courants $i_{1\_on}$ et $i_{1\_OFF}$ dans les deux phases alimentées.

Durant les périodes ON, les phases d'alimentation (L1 et L2 sur la figure 1) sont alimentées normalement au travers des deux transistors (T1 et T4 dans l'état illustré sur la figure 1). La tension $U_3$ sur la phase de mesure (L3) est presque rectangulaire et le courant $i_1$ à travers cette phase croit de façon pratiquement proportionnelle à l'intégrale de la tension $U_3$ (les phases du moteur ont un comportement prédominant de type inductif).

Suite au blocage d'un ou deux transistors au début de la période OFF (transistor T1 et T4 sur l'exemple d'état de la figure 2 ; transistor T4 sur l'exemple de la figure 3), l'alimentation des phases alimentées est modifiée. Comme le courant ne peut s'arrêter instantanément, les diodes permettent au courant de décroître avec une tension nulle (blocage d'un transistor) ou avec une tension inverse (blocage de deux transistors). Par conséquent le courant i1 décroît pendant les périodes OFF. Toutes les phases alimentées pendant la période ON le sont aussi pendant la période OFF mais avec une valeur de tension différente qui change la pente du courant. La mesure de la tension induite sur la phase non alimentée change donc entre les périodes ON et les périodes OFF, ce qui permet d'obtenir deux équations pour deux inconnues.

On a donc :

$$u_{3\_on} = (L_{31} - L_{32}) \cdot \frac{di_1}{dt}\bigg|_{on} + u_{a3}$$

$$u_{3\_off} = (L_{31} - L_{32}) \cdot \frac{di_1}{dt}\bigg|_{off} + u_{a3}$$

$$\Delta u_3 = u_{3\_on} - u_{3\_off} = (L_{31} - L_{32}) \cdot \left(\frac{di_1}{dt}\bigg|_{on} - \frac{di_1}{dt}\bigg|_{off}\right)$$

On obtient une différence de tension $\Delta u_3$ qui ne dépend plus de la tension induite de mouvement $u_{a3}$ mais uniquement de la différence entre deux inductances mutuelles et de la différence entre deux dérivées du courant de phase $i_1$.

Les dérivées du courant de phase $i_1$ pendant les périodes ON et OFF peuvent être estimées théoriquement. Pendant la période ON, les phases 1 et 2 sont en série avec la tension $U_{dc}$:

$$U_{dc} = (R_1 + R_2) \cdot i_1 + (L_{11} + L_{22} - 2 \cdot L_{12}) \cdot \frac{di_1}{dt} + (u_{a1} - u_{a2})$$

$$\boxed{\frac{di_1}{dt}\bigg|_{on} = \frac{U_{dc} - (R_1 + R_2) \cdot i_1 - (u_{a1} - u_{a2})}{(L_{11} + L_{22} - 2 \cdot L_{12})}}$$

Pendant la période OFF, nous avons en revanche les phases 1 et 2 en série avec la tension -Udc:

$$-U_{dc} = (R_1 + R_2) \cdot i_1 + (L_{11} + L_{22} - 2 \cdot L_{12}) \cdot \frac{di_1}{dt} + (u_{a1} - u_{a2})$$

$$\left. \frac{di_1}{dt} \right|_{off} = \frac{-U_{dc} - (R_1 + R_2) \cdot i_1 - (u_{a1} - u_{a2})}{(L_{11} + L_{22} - 2 \cdot L_{12})}$$

La différence entre les dérivées de courant ON/OFF donne alors :

$$\left. \frac{di_1}{dt} \right|_{on} - \left. \frac{di_1}{dt} \right|_{off} = \frac{2 \cdot U_{dc} - (R_1 + R_2) \cdot (i_{1\_on} - i_{1\_off})}{(L_{11} + L_{22} - 2 \cdot L_{12})}$$

et

$$\Delta u_3 = (L_{31} - L_{32}) \cdot \frac{2 \cdot U_{dc} - (R_1 + R_2) \cdot (i_{1\_on} - i_{1\_off})}{(L_{11} + L_{22} - 2 \cdot L_{12})}$$

Dans le cas où l'ondulation de courant est faible, on peut négliger les termes $R_i$ :

$$\left. \frac{di_1}{dt} \right|_{on} - \left. \frac{di_1}{dt} \right|_{off} \cong \frac{2 \cdot U_{dc}}{(L_{11} + L_{22} - 2 \cdot L_{12})}$$

et

$$\Delta u_3 \cong (L_{31} - L_{32}) \cdot \frac{2 \cdot U_{dc}}{(L_{11} + L_{22} - 2 \cdot L_{12})}$$

Nous définissons l'inductance mutuelle $L_{12\_3}$ comme étant l'inductance mutuelle entre les deux phases 1 et 2 alimentées et la phase 3 non alimentée, ce qui nous permettra de parler de variation d'inductance mutuelle au lieu de la variation d'une différence d'inductance mutuelle:

$$L_{12\_3} = (L_{31} - L_{32})$$

Cette inductance mutuelle $L_{12\_3}$ est théoriquement nulle pour un moteur parfaitement symétrique. Des dissymétries du circuit ferromagnétique, introduites par exemple par la saturation locale du circuit fer par le flux créé par l'aimant permanent, introduisent cependant un léger couplage entre les phases alimentées et la phase non alimentée.

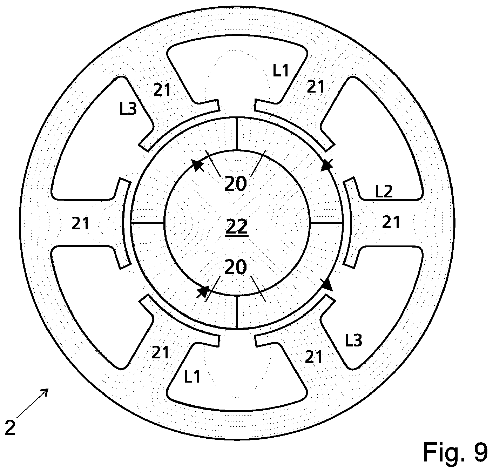

La figure 9 présente à titre d'exemple la structure d'un moteur brushless 2 à 4 pôles 20 et à 6 dents. Pour cette structure de moteur, les bobines constituant les 3 phases (L1, L2, L3) sont bobinées de manière concentrique autour de chaque dent 21. Les lignes de champ des flux magnétiques créé par les aimants rotoriques sont aussi représentées. Elles illustrent qu'en fonction de la position du rotor 22, le circuit fer sera saturé de manière dissymétrique.
L'inductance mutuelle $L_{12}$ est donnée par le produit de la perméance mutuelle $\Lambda_{12}$ et du nombre de spires des phases 1 et 2 :

$$L_{12} = N_1 \cdot N_2 \cdot \Lambda_{12}$$

Le calcul théorique de la perméance mutuelle $\Lambda_{12}$ peut par exemple être réalisé en déterminant le flux $\phi_{12}$ créé par la phase 1 et qui traverse la phase 2, $\theta_1$ étant le potentiel magnétique de la phase 1

$$\Lambda_{12} = \frac{\phi_{12}}{\theta_1}$$

Les dissymétries du circuit ferromagnétique introduites par la saturation locale du circuit magnétique par le flux créé par l'aimant introduisent une légère variation du flux $\phi_{12}$ en fonction de la position rotorique malgré un potentiel $\theta_1$ constant :

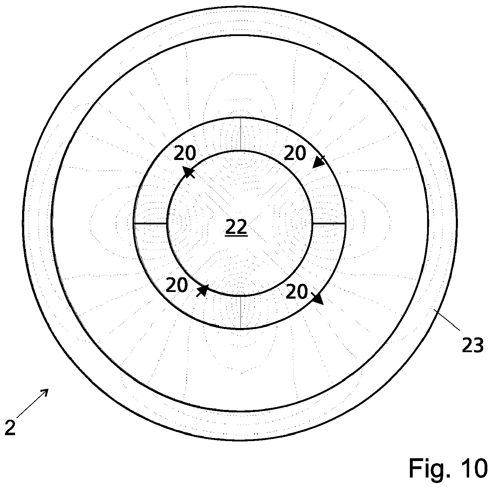

La figure 10 présente un moteur dit à bobinage dans l'entrefer. Le bobinage est placé dans l'entrefer sans dents entre le rotor 22 et le stator 23. Le même raisonnement est applicable aux moteurs des figures 9 et 10.

Des mesures et des calculs montrent que la variation de l'inductance mutuelle entre les deux phases alimentées et la phase non alimentées varie selon une fonction proche d'une sinusoïde de fréquence double par rapport à la période électrique du moteur. Le calcul inverse à partir d'une sinusoïde permet de recalculer une position avec deux solutions possibles par période de la sinusoïde. Une bonne connaissance a priori de la position précédente et de la vitesse permet de différencier les deux solutions.

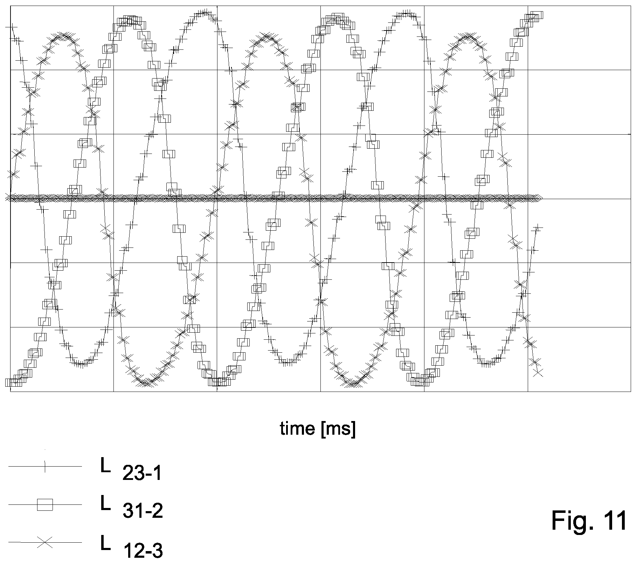

Dans le cas triphasé, la variation de l'inductance mutuelle entre deux combinaisons différentes de deux phases alimentées et une phase non alimentée correspond à des fonctions proches de sinusoïdes déphasées de 120°. La figure 11 présente la mesure des inductances mutuelles L23_1, L31_2 et L12_3 avec la méthode décrite lorsqu'un moteur triphasé du type de la figure 9 tourne lentement à vitesse sensiblement constante.

Le calcul inverse à partir de sinusoïdes déphasées de 120° permet de recalculer une position avec une solution unique par période de la sinusoïde, donc une position par rapport à 180° électrique du moteur. L'algorithme de contrôle exploitera avantageusement cet aspect en commutant les phases alimentées afin de mesurer indirectement les inductances mutuelles de combinaisons différentes de phases alimentées/non alimentées générant du couple.

Certains moteurs présentent des variations d'inductance mutuelle s'éloignant de la forme sinusoïde. Le calcul inverse de la position pourra en tenir compte par l'utilisation de tables normalisées au lieu de fonctions trigonométriques inverses. Des offsets ou des dissymétries peuvent aussi apparaître pour certains types de moteurs.

Des mesures effectuées en injectant différents niveaux de courant dans un moteur du type de la figure 9 ont démontré que l'utilisation d'un fort courant introduit une saturation, provoquant parfois un aplatissement d'une période complète de l'inductance mutuelle. Inversement, un faible courant injecté produit des courbes d'inductances mutuelles symétriques.

Les courbes d'inductance mutuelles obtenues avec un niveau de courant élevé sont donc non symétriques en raison de la saturation. Le calcul inverse à partir de ces courbes d'inductances mutuelles non symétriques permet de recalculer une position avec une solution unique par période électrique donc par rapport à 360° électrique du moteur. Le calcul inverse à partir des courbes non saturées (symétriques, obtenues avec un niveau de courant faible) permet de recalculer une position avec une solution unique par demi-période électrique - donc par rapport à 180° électrique du moteur. Par conséquent, il est possible d'obtenir des informations supplémentaires quant à la position du rotor en tenant compte de la saturation des éléments ferromagnétiques du moteur en fonction de l'intensité du courant injecté dans les phases alimentées ; ces informations additionnelles peuvent par exemple être exploitées pour lever une ambigüité quant à la position rotorique, ou pour une mesure de position absolue.

Il est intéressant de noter que les inductances propres varient peu pour les mesures effectuées à faible courant alors qu'elles peuvent varier assez fortement (par exemple dans un facteur 2) pour les mesures effectuées avec un courant injecté important et un moteur fortement saturé par le flux rotorique.

Des mesures et des tests ont aussi été effectués avec un autre moteur triphasé du type de la figure 10 pour 3 vitesses différentes, démontrant la validité du concept.

Ces calculs et ces mesures montrent que pour un moteur avec trois phases ou plus, la différence $\Delta u_3$ mesurée sur la phase non alimentée est proportionnelle à la différence entre les inductances mutuelles L31 et L32, soit les inductances mutuelles entre la phase non alimentée (phase 3) et l'ensemble des phases alimentées (phases 1 et 2). Le caractère différentiel permet d'obtenir un signal amplifiable même pour une faible variation des inductances mutuelles en fonction de la position du rotor.

La variation des inductances mutuelles en fonction de la position rotorique peut avoir différentes causes, la plus probable étant la saturation d'une partie du circuit magnétique par le flux rotorique. Même une faible variation de la perméabilité introduit une variation des inductances mutuelles, utilisable même si elle est faible. D'autres sources pourront toutefois participer au phénomène, soit une variation d'entrefer, une anisotropie du rotor ou une anisotropie de l'aimant rotorique, etc.....

La différence $\Delta u_3$ présente en outre l'avantage d'être non sensible à la tension induite. Elle est proportionnelle à la pente du courant, donc à $U_{dc}/Ls$, avec Ls = L11-L12 = inductance de phase équivalente. Une inductance additionnelle ajoutée en série avec chaque phase (pour les moteurs à bobinage dans l'entrefer) diminuera l'amplitude du signal, mais ne perturbera pas la mesure de $\Delta u_3$.

Il va de soi que à la place de la mesure de la différence de tension induite $\Delta u_3$ aux bornes de la phase L3, il est aussi possible de mesurer la différence de tension aux bornes de n'importe quelle autre phase non alimentée dans un moteur biphasé ou triphasé : $\Delta u_1$ ou $\Delta u_2$ par exemple. Il est aussi possible dans un même arrangement d'exploiter successivement la mesure de tension aux bornes de différentes phases. Les valeurs provenant de différentes phases génèrent des signaux déphasés qui permettent un calcul de la position avec par exemple des fonctions trigonométriques inverse (sinus) ou des tables normalisées. Il est aussi possible d'exploiter plusieurs mesures redondantes sur une ou plusieurs phases et de calculer des moyennes par exemple, ou d'utiliser la différence la plus significative ou la moins bruitée.

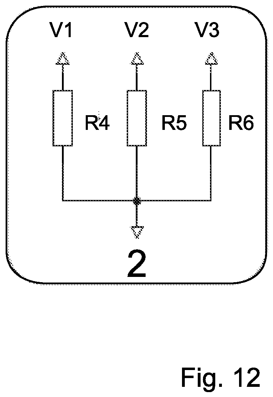

Les équations ci-dessus utilisent la mesure de la tension $U_1$, $U_2$ et/ou $U_3$ aux bornes de la phase non alimentée par rapport au neutre. Le principe reste toutefois valable pour une tension mesurée par rapport à un neutre artificiel réalisé avec 3 résistances additionnelles R4 à R6 connectées en étoile entre les trois conducteurs de phase V1, V2 et V3, de la manière illustrée sur la figure 12.

Le principe reste également valable et équivalent pour un calcul indirect de la tension aux bornes de la phase non alimentée par rapport au neutre, dans lequel le calcul est effectué à partir d'autres mesures comme par exemple la mesure des potentiels de phase. De manière générale, lorsque dans la présente demande on évoque une mesure de tension de la phase non alimentée (ou phase flottante), on inclut aussi des mesures indirectes dans lesquelles cette tension est obtenue indirectement à partir d'autres mesures.

La mesure de la tension au bornes de la phase flottante par rapport au neutre ou à un neutre artificiel et/ou la mesure du potentiel de la phase non alimentée (phase flottante) est souvent perturbée par des phénomènes transitoires liés à des capacités parasites qui peuvent être amortis ou filtrés pour exploiter au mieux ce procédé.

Les équations développées ont considéré un moteur triphasé connecté en étoile. L'invention est toutefois applicable à un moteur triphasé connecté en triangle. Il est en effet possible de calculer l'équivalence étoile d'un bobinage triangle ; en mesurant les tensions des phases non alimentées par rapport à un neutre artificiel, le circuit d'entraînement ne fera pas la différence entre un moteur connecté en étoile ou en triangle. Par conséquent, pour un moteur triphasé connecté en triangle, les 3 points de connexion du triangle sont les trois potentiels alimentés par exemple par un pont à 6 transistors. La tension est alors appliquée à 2 potentiels et les 3 phases sont alimentées, une phase étant en parallèle avec 2 phases en série. Le troisième potentiel (point milieu des deux phases en série) est flottant.

Les équations développées ont considéré un moteur triphasé connecté en étoile alimenté par un pont triphasé. L'invention est toutefois applicable à un moteur triphasé avec 3 phases indépendantes alimentées séparément par 3 ponts de puissance et permettant de reproduire une alimentation sensiblement équivalente.

Les équations développées ont considéré un moteur triphasé connecté en étoile alimenté par un pont triphasé. L'invention est toutefois applicable à un moteur de plus de 3 phases permettant de reproduire une alimentation sensiblement équivalente.

Les structures de moteurs présentées pour illustrer l'invention correspondent à des moteurs de 4 pôles avec 6 dents et sans dents. De nombreuses autres configurations de moteurs avec un nombre de pôles et de dents différents peuvent être utilisées avec la méthode et l'arrangement de la présente invention.

Par ailleurs, la mesure de la tension induite sur la phase non alimentée peut aussi être effectuée en injectant sur la ou les phases alimentées un signal haute fréquence qui n'est pas dû à la modulation en PWM de la tension d'alimentation ; il est parfaitement possible, dans le cadre de l'invention, d'ajouter à une tension d'alimentation basse fréquence ou non modulée un signal de mesure haute fréquence, destiné uniquement à mesurer l'inductance mutuelle entre phases.

Moteur biphasé

Le même procédé peut aussi être employé avec un moteur biphasé, par exemple un moteur dans lequel la phase 1 est alimentée avec un courant contrôlé par PWM et la tension induite sur la phase 2 non alimentée est mesurée pour observer la variation de l'inductance mutuelle:

$$u_2 = R_2 \cdot i_2 + L_{22} \cdot \frac{di_2}{dt} + L_{21} \cdot \frac{di_1}{dt} + u_{a2}$$

avec

$$i_2 = 0$$

Soit

$$u_2 = L_{21} \cdot \frac{di_1}{dt} + u_{a2}$$

$$u_{2\_on} = L_{21} \cdot \frac{di_1}{dt}_{on} + u_{a2}$$

$$u_{2\_off} = L_{21} \cdot \frac{di_1}{dt}_{off} + u_{a2}$$

$$\Delta u_2 = u_{2\_on} - u_{2\_off} = L_{21} \cdot \left( \frac{di_1}{dt}_{on} - \frac{di_1}{dt}_{off} \right)$$

Pendant la période ON, la phase 1 est en série avec Udc :

$$U_{dc} = R_1 \cdot i_1 + L_{11} \cdot \frac{di_1}{dt} + u_{a1}$$

$$\frac{di_1}{dt}_{on} = \frac{U_{dc} - R_1 \cdot i_1 - u_{a1}}{L_{11}}$$

Pendant la période OFF, la phase 1 est en série avec -Udc :

$$-U_{dc} = R_1 \cdot i_1 + L_{11} \cdot \frac{di_1}{dt} + u_{a1}$$

$$\frac{di_1}{dt}_{off} = \frac{-U_{dc} - R_1 \cdot i_1 - u_{a1}}{L_{11}}$$

$$\frac{di_1}{dt}_{on} - \frac{di_1}{dt}_{off} = \frac{2 \cdot U_{dc} - R_1 \cdot (i_{1\_on} - i_{1\_off})}{L_{11}}$$

$$\Delta u_2 = L_{21} \cdot \frac{2 \cdot U_{dc} - R_1 \cdot (i_{1\_on} - i_{1\_off})}{L_{11}}$$

Dans le cas où l'ondulation de courant est faible, on peut négliger les termes Ri:

$$\frac{di_1}{dt}_{on} - \frac{di_1}{dt}_{off} \cong \frac{2 \cdot U_{dc}}{L_{11}}$$

$$\Delta u_2 \cong L_{21} \cdot \frac{2 \cdot U_{dc}}{L_{11}}$$

Dans un moteur biphasé, le calcul de la position est effectué en fonction des inductances mutuelles mesurées. La variation de l'inductance mutuelle entre une phase alimentée et la phase non alimentée d'un moteur biphasé varie selon une fonction proche d'une sinusoïde de fréquence double par rapport à la période électrique du moteur. Le calcul inverse à partir d'une sinusoïde permet de recalculer une position avec deux solutions possibles par période de la sinusoïde. Une bonne connaissance de la position précédente et de la vitesse permet de différencier les deux solutions.

Dans le cas biphasé, les deux combinaisons différentes de la phase alimentée et la phase non alimentée permettent de mesurer la même inductance mutuelle.

La différence $\Delta u_2$ est proportionnelle à l'inductance mutuelle L12. Le caractère différentiel observé dans le cas triphasé n'est pas reproduit pour le cas biphasé. Toutefois, pour un moteur biphasé, l'inductance mutuelle doit être idéalement nulle tandis que la saturation locale introduit des dissymétries du circuit fer et une inductance mutuelle qui varie en fonction de la position rotorique autour d'une valeur nulle ; les résultats sont donc exploitables.

La variation des inductances mutuelles d'un moteur biphasé peut avoir les mêmes origines que pour un moteur triphasé soit la saturation d'une partie du circuit magnétique par le flux rotorique (même une faible variation de la perméabilité introduisant une variation des inductances mutuelles utilisable même si elle est faible), une variation d'entrefer, une anisotropie du rotor ou une anisotropie de l'aimant rotorique, etc....

Des mesures de la variation de l'inductance mutuelle entre les deux phases d'un moteur biphasé ont été effectuées en alimentant la phase 1 avec un courant contrôlé par PWM et en mesurant la tension aux bornes de la seconde phase non alimentées pour une vitesse de rotation nulle. Ces mesures ont permis de constater que le signal mesuré sur la phase non alimentée est synchrone par rapport à la dérivée de l'ondulation de courant introduit par le PWM et que son amplitude et son signe varient en fonction de la position rotorique. L'analyse de ce signal permet de dire que pour le moteur mesuré, l'inductance mutuelle est proche de zéro pour la position d'équilibre correspondant au zéro de couple de la phase alimentée et que l'inductance mutuelle augmente lorsque l'on s'éloigne de la position d'équilibre avec un changement de signe suivant que le déplacement se fait dans la direction CW ou CCW.

La valeur maximale de l'inductance mutuelle correspond typiquement à 3% de l'inductance propre. Elle est donc faible et négligeable pour la fonctionnalité principale du moteur qui est de générer du couple. La variation de l'inductance mutuelle autour d'une valeur nulle est toutefois intéressante à exploiter pour déterminer de manière indirecte la position du rotor. Elle est très vraisemblablement due à la saturation locale du circuit fer qui introduit des dissymétries dans le circuit magnétique et introduit ainsi un léger couplage entre les phases du moteur.

Le procédé et l'arrangement de l'invention permettent ainsi de déterminer la position du rotor même lorsque le moteur est alimenté, et sans nécessiter de circuit électronique supplémentaire ni modifier l'entraînement du moteur. En outre, la valeur des inductances mutuelles peut être mesurée même à vitesse nulle, lorsque le rotor est arrêté.

Cette méthode peut en outre être combinée avec des technologies de détection de position rotorique sans capteur basées sur la détection des passages par zéro de la tension induite de la phase non alimentée pour la plage de vitesse moyenne à haute : les deux approches utilisent en effet la mesure de la tension de phase(s) non alimentée(s). En calculant une différence ou une somme des tensions mesurées à la fin des temps ON et OFF, il sera alors possible d'exploiter soit la mesure de l'inductance mutuelle soit la détection du passage par zéro de la tension induite de mouvement, ou les deux ensemble. Dans un mode de réalisation, la méthode décrite ci-dessus de mesure de position et/ou de vitesse par mesure d'inductance mutuelle est combinée avec la méthode basée sur la variation des inductances propres décrite dans la demande de brevet européen EP2036197, de manière à déterminer la valeur de l'inductance propre des deux phases alimentées en série avec une modulation PWM et de déterminer la position rotorique à partir de l'inductance mutuelle entre les phases alimentées et la phase non alimentée et/ou à partir de l'inductance propre des phases alimentées en série.

Par ailleurs, la connaissance de l'inductance propre $L_{ii}$ des phases alimentées peut être exploitée pour améliorer ou corriger le calcul de l'inductance mutuelle $L_{ij}$ sur la base de la différence de tension induite. L'utilisation d'une autre technologie sans capteur basée sur la mesure de l'inductance propre permet donc de corriger le calcul de la différence de tension induite $\Delta u$ (par exemple $\Delta u_3$) notamment si l'inductance propre des phases alimentées varie.

D'autres technologies sans capteur, par exemple la reconstitution de la tension induite de la ou des phase(s) alimentée(s) en fonction des courant(s) et tension(s) appliqués, peuvent avantageusement être combinées au procédé de l'invention pour améliorer les performances du système et la précision ou la fiabilité de la mesure.

La méthode décrite utilise une alimentation par modulation de largeur d'impulsion (PWM). Différentes variantes de cette modulation PWM peuvent être employées :

- Modulation par limitation de courant entre deux seuils Imax et Imin.

- Modulation par limitation de courant avec 1 seuil Imax et un temps OFF donné.

- Modulation par limitation de courant avec un taux donné défini par un temps ON et un temps OFF.

- les états ON/OFF peuvent être réalisés de différentes manières avec un PWM sur 1 ou 2 transistors, en enclenchant ou non les transistors en parallèle avec les diodes de roue libre, etc.

- des PWM mixtes (par exemple avec des cycles comprenant une première période durant laquelle deux transistors sont ON, suivi par une deuxième courte période avec deux transistors OFF, puis une troisième période avec un seul transistor OFF) peuvent aussi être employées pour réduire les oscillations de courant.

La méthode décrite utilise de préférence une alimentation par modulation de largeur d'impulsion car cette méthode de contrôle du courant permet d'imposer dans la (les) phase(s) alimentée(s) un courant moyen générant le couple utile avec une composante plus haute fréquence permettant de mesurer la variation des inductances mutuelles en fonction de la position rotorique et dont la valeur moyenne est nulle et ne génère pas de couple. Une électronique de puissance plus complexe permettrait cependant aussi de générer une composante de courant pour générer du couple et une composante de courant à plus haute fréquence uniquement destinée à mesurer la variation des inductances mutuelle en fonction de la position rotorique. De telles approches seraient équivalentes quant aux résultats obtenus mais rendraient l'arrangement plus complexe ; un contrôle de position basée sur les composantes haute fréquence inhérentes à l'entraînement PWM exploite avantageusement une fonctionnalité existante et nécessaire pour la plupart des entraînements de moteur avec contrôle de courant et de couple.

Par exemple, un circuit d'entraînement plus complexe pourrait utiliser des capacités de découplage pour mesurer les diverses inductances mutuelles même lorsque les 3 phases d'un moteur triphasé sont alimentées simultanément par des courants générant du couple. L'utilisation de capacités de découplage permettrait en effet de superposer des composantes de courant à plus haute fréquence dans certaines phases et de mesurer la réponse dans les autres phases sans perturber le couple fourni par le moteur pour en déduire l'inductance mutuelle. Ces composantes de courant/tension à plus hautes fréquences injectées au travers de capacités de découplage peuvent être générées par des ponts de puissance additionnels avec des « PWM » de fréquence supérieur (typiquement 250 à 500 kHz) au PWM utilisé pour contrôler les courants moteur (qui est typiquement 20 à 40kHz). En synchronisant les PWM de mesure et moteur, on obtient une méthode plus complexe permettant d'estimer en permanence les inductances mutuelles tout en exploitant la méthode de la présente invention décrite ci-dessus.

La méthode décrite plus haut utilise une différence de deux valeurs de tension mesurées à la fin des périodes ON et OFF du PWM. Il est également possible dans le cadre de l'invention de mesurer les tensions à d'autres instants, et de calculer la différence entre les tensions mesurées à ces autres instants.

Il est également possible, même dans le cas d'un moteur triphasé, de ne mesurer qu'une valeur de tension sans calculer de différence. Dans ce cas, on ne s'affranchit pas de la tension induite de mouvement $u_{a3}$. Cette tension induite de mouvement est cependant nulle à l'arrêt, et peut être compensée d'une autre façon pour des vitesses non nulles, par exemple en fonction de la connaissance théorique de la vitesse de rotation et de la position du rotor.

La méthode décrite pour un moteur triphasé utilise une commande dite à 120° avec 6 séquences de commutation offrant en permanence une phase non alimentée. Des variantes d'implémentation pourraient utiliser d'autres types de commande avec des séquences de commutation alimentant 3 phases pour ne revenir qu'occasionnellement à des séquences avec une phase flottante non alimentée. De telles alimentations pourraient utiliser des commutations sinus, 150°, 180°, ...

Dans un mode de réalisation préférentiel, la mesure de la tension induite sur la phase non alimentée est réalisée au moyen d'un détecteur de tension non représenté, par exemple un convertisseur analogique-numérique convertissant en temps réel la tension aux bornes d'une impédance entre la phase et le neutre en une valeur numérique. Ce détecteur de tension génère un signal représentatif de la tension induite, par exemple un signal numérique.

Un circuit de traitement, par exemple un circuit de traitement numérique basé sur un processeur, un microcontrôleur ou un processeur de traitement de signal (DSP), exécute un programme afin de déterminer en continu, à partir de ce signal numérique, la valeur de l'inductance mutuelle et/ou de la position et/ou de la vitesse du rotor. Ce circuit numérique de traitement est avantageusement agencé pour calculer des fonctions trigonométriques inverses à partir des mesures de la tension induite sur la ou les phases alimentées, et pour en déduire la vitesse et/ou la position. Dans le cas où la variation d'inductance mutuelle n'est pas au moins approximativement sinusoïdale, le circuit numérique utilise avantageusement des tables dépendant du moteur et permettant de déterminer la position et/ou la vitesse du moteur en fonction des mesures de tension induite, respectivement des mesures d'inductance mutuelle. Le circuit numérique peut aussi être utilisé pour commander le circuit de commutation 1 et le blocage respectivement déblocage des six transistors T1 à T6 constituant le pont de transistors. La commande de ces transistors peut elle-même dépendre de la tension induite u3 mesurée et du calcul de la position et/ou de la vitesse, par exemple afin de réaliser un circuit de contrôle en boucle fermée permettant de forcer la vitesse et/ou la position du rotor.

**Revendications**

**1.** Méthode pour déterminer la position et/ou de la vitesse d'un rotor (22) dans un moteur (2) brushless ou dans un moteur pas à pas, comprenant les étapes suivantes :

application d'une tension et/ou un courant dans au moins une phase alimentée (L1, L2) du moteur (2) ;
mesure dans une phase non alimentée (L3) du moteur de la tension induite ($u_3$) par inductance mutuelle entre phases ;
détermination de ladite position et/ou de la vitesse du rotor à partir de ladite tension induite,

comprenant une étape de mesure de ladite tension induite ($u_3$) par inductance mutuelle en deux instants différents (ON, OFF),
et une étape de calcul de la différence de tension induite entre les deux dits instants,
dans laquelle ladite tension induite ($u_3$) est mesurée une première fois pendant une période (ON) d'application de tension à la ou aux phases alimentées (L1, L2), et une seconde fois pendant une période (OFF) durant laquelle la tension appliquée à la ou aux phases alimentées (L1, L2) est modifiée.

**2.** La méthode de la revendication 1, comprenant une étape de détermination de l'inductance mutuelle entre la ou les phases alimentées et la phase non alimentée, la position instantanée du rotor étant déterminée à partir de ladite inductance mutuelle.

**3.** La méthode de l'une des revendications 1 à 2, dans laquelle ledit moteur (2) est un moteur triphasé,
ladite tension et/ou ledit courant étant appliqué en chaque instant simultanément à deux dites phases alimentées du moteur,
la tension induite étant mesurée dans la troisième phase non alimentée du moteur.

**4.** La méthode de la revendication 3, dans laquelle ladite tension induite ($u_3$) est mesurée entre ladite phase non alimentée (L3) et le neutre (N) ou un neutre virtuel.

**5.** La méthode de l'une des revendications 3 ou 4, comprenant :

a) l'application de ladite tension et/ou dudit courant à une première paire de phases (L1, L2) et la mesure dans la troisième phase non alimentée (L3) du moteur de la tension induite par inductance mutuelle ;
b) l'application d'une deuxième tension et/ou d'un deuxième courant à ladite première paire de phases et la mesure dans ladite phase non alimentée du moteur de la tension induite par inductance mutuelle ;
c) la détermination de ladite position du rotor à partir de ladite tension induite dans ladite phase non alimentée au cours des étapes a) et b).

**6.** La méthode de l'une des revendications 3 ou 4, comprenant :

a) l'application de ladite tension et/ou dudit courant à une première paire de phases (L1, L2) et la mesure dans la troisième phase non alimentée (L3) du moteur de la tension induite par inductance mutuelle ;
b) l'application d'une deuxième tension et/ou d'un deuxième courant à une deuxième paire de phases et la mesure dans la phase non alimentée du moteur de la tension induite par inductance mutuelle ;
c) la détermination de ladite position du rotor à partir de ladite tension induite dans chaque phase non alimentée au cours des étapes a) et b).

**7.** La méthode de l'une des revendications 1 à 6, dans laquelle ladite tension et/ou ledit courant est modulé en largeur d'impulsions (PWM) avec des périodes (ON) durant lesquelles au moins une phase est alimentée au travers d'au moins un transistor (T1 et T4), et des périodes (OFF) durant lesquelles au moins un dit transistor (T1 et/ou T4) est bloqué de manière à modifier le courant ($i_{ph1}$ ; $i_{ph2}$) dans ladite au moins une phase.

**8.** La méthode de la revendication 7, dans laquelle ladite tension induite est mesurée pendant chaque période (ON) d'alimentation de ladite phase et pendant chaque période (OFF) de blocage dudit transistor, la méthode incluant une étape de calcul de la différence de tension induite mesurée durant chacune des dites périodes (ON et OFF).

9. La méthode de l'une des revendications 1 à 8 dans laquelle ledit moteur (2) est alimenté par un circuit de commutation (1) comportant un pont triphasé à six transistors (T1 à T6).

10. La méthode de l'une des revendications 1 à 2, dans laquelle ledit moteur (2) est un moteur biphasé,
ladite tension et/ou ledit courant étant appliqué à une phase alimentée du moteur,
la tension induite étant mesurée dans la phase non alimentée du moteur.

11. La méthode de l'une des revendications 1 à 10, comprenant une étape de détermination des instants d'alimentation des phases et / ou du courant d'alimentation en fonction de ladite position et/ou vitesse.

12. La méthode de l'une des revendications 1 à 11, dans laquelle ladite inductance mutuelle varie de façon approximativement sinusoïdale,
et dans lequel la position dudit rotor (22) est déterminée par calcul de fonctions trigonométriques inverses.

13. La méthode de l'une des revendications 1 à 11, dans lequel la position dudit rotor (22) est déterminée à partir des variations de ladite inductance mutuelle à l'aide de tables normalisées.

14. La méthode de l'une des revendications 1 à 13, comportant une étape de filtrage ou d'amortissement de la mesure du potentiel de la phase non alimentée, afin de réduire les perturbations transitoires liées à des capacités parasites.

15. La méthode de l'une des revendications 1 à 14, comportant une étape d'injection d'un signal haute fréquence sur une des phases du moteur (2), et la mesure de la tension induite par ledit signal haute fréquence sur au moins une autre phase dudit moteur.

16. La méthode de l'une des revendications 1 à 15, comportant en outre une étape de détection du passage par zéro de la tension induite de mouvement, la détermination de ladite position et/ou de ladite vitesse étant à la fois basée sur la mesure de ladite inductance mutuelle entre phases et sur ladite détection du passage par zéro de la tension induite de mouvement.

17. La méthode de l'une des revendications 1 à 16, comportant une étape de détermination de la saturation des éléments ferromagnétiques du moteur, cette information étant utilisée pour la détermination de ladite position et/ou de ladite vitesse.

18. La méthode de l'une des revendications 1 à 17, comportant une étape de détermination de la variation d'inductances mutuelles et/ou propres en fonction de l'intensité du courant.

19. Arrangement pour déterminer la position du rotor et pour alimenter un moteur brushless ou pas à pas (2), comportant :

un circuit de commutation (1) pour alimenter sélectivement et alternativement une ou plusieurs phases (L1, L2, L3) dudit moteur avec une tension et/ou un courant comportant une composante haute fréquence ;
un détecteur de tension pour mesurer la tension induite ($U_3$) dans une phase non alimentée (L3) en raison de l'inductance mutuelle avec les phases alimentées, et pour générer un signal représentatif de ladite tension induite ledit détecteur étant agencé pour mesurer ladite tension induite ($u_3$) par inductance mutuelle en deux instants différents (ON, OFF),
et calculer la différence de tension induite entre les deux dits instants dans laquelle ladite tension induite ($u_3$) est mesurée une première fois pendant une période (ON) d'application de tension à la ou aux phases alimentées (L1, L2), et une seconde fois pendant une période (OFF) durant laquelle la tension appliquée à la ou aux phases alimentées (L1, L2) est modifiée
un circuit de traitement agencé pour calculer la position instantanée et/ou la vitesse instantanée du rotor à partir dudit signal.

20. L'arrangement de la revendication 19, dans lequel ledit circuit de traitement est arrangé pour mettre en oeuvre le procédé de l'une des revendications 1 à 18.

21. Support de données informatique contenant un programme informatique exécutable par un processeur pour exécuter la méthode de l'une des revendications 1 à 18.

**Patentansprüche**

1. Verfahren zum Bestimmen der Position und/oder der Geschwindigkeit eines Rotors (22) in einem bürstenlosen Motor (2) oder einem Schrittmotor, mit den folgenden Schritten:

   Anlegen einer Spannung und/oder eines Stroms in mindestens einer betriebenen Phase (L1, L2) des Motors (2);

   Messen in einer nichtbetriebenen Phase (L3) des Motors der durch Induktivität zwischen den Phasen induzierten Spannung (u3);
   Bestimmen der Position und/oder Geschwindigkeit des Rotors von der induzierten Spannung,

   aufweisend einen Schritt des Messens der Spannung (u3) induziert von der Induktivität zwischen den Phasen, und einen Schritt des Berechnens des Unterschieds der induzierten Spannung zwischen zwei Momenten,

   wobei die induzierte Spannung (u3) ein erstes Mal während einer Zeitspanne (ON), wenn die Spannung an der betriebenen Phase oder den betriebenen Phasen (L1, L2) angelegt wird, und ein zweites Mal während einer Zeitspanne (OFF), wenn die an der betriebenen Phase oder an den betriebenen Phasen (L1, L2) angelegte Spannung geändert wird, gemessen wird.

2. Verfahren nach Anspruch 1, aufweisend einen Schritt des Bestimmens der Induktivität zwischen der betriebenen Phase oder den betriebenen Phasen und der unbetriebenen Phase, wobei die aktuelle Position des Rotors von der Induktivität bestimmt wird.

3. Verfahren nach einem der Ansprüche 1 bis 2, wobei der Motor (2) ein dreiphasiger Motor ist, wobei die Spannung und/oder der Strom zu jedem Zeitpunkt gleichzeitig an die zwei betriebenen Phasen des Motors angelegt werden, wobei die induzierte Spannung in der dritten, unbetriebenen Phase des Motors gemessen wird.

4. Verfahren nach Anspruch 5, wobei die induzierte Spannung (u3) zwischen der unbetriebenen Phase (L3) und einem Neutralleiter oder einem virtuellen Neutralleiter gemessen wird.

5. Verfahren nach einem der Ansprüche 3 oder 4, aufweisend:

   a) das Anlegen der Spannung und/oder des Stroms an ein erstes Paar von Phasen (L1, L2) und das Messen der von der Induktivität induzierten Spannung in der dritten unbetriebenen Phase (L3) des Motors;
   b) das Anlegen einer zweiten Spannung und/oder eines zweiten Stroms an das erste Paar von Phasen (L1, L2) und das Messen der von der Induktivität induzierten Spannung in der unbetriebenen Phase (L3) des Motors;
   c) Bestimmen der Position des Rotors von der induzierten Spannung in der unbetriebenen Phase während der Schritte a) und b).

6. Verfahren nach einem der Ansprüche 3 oder 4, aufweisend:

   a) das Anlegen der Spannung und/oder des Stroms an ein erstes Paar von Phasen (L1, L2) und das Messen der von der Induktivität induzierten Spannung in der dritten unbetriebenen Phase (L3) des Motors;
   b) das Anlegen einer zweiten Spannung und/oder eines zweiten Stroms an das zweite Paar von Phasen (L1, L2) und das Messen der von der Induktivität induzierten Spannung in der unbetriebenen Phase (L3) des Motors;
   c) Bestimmen der Position des Rotors von der induzierten Spannung in der unbetriebenen Phase während der Schritte a) und b).

7. Verfahren nach einem der Ansprüche 1 bis 6, wobei die Spannung und/oder der Strom Pulsweitenmoduliert (PWM) ist mit Zeitspannen (ON) während denen mindestens eine Phase durch mindestens einen Transistor (T1 und/oder T4) betrieben wird und mit Zeitspannen (OFF) während denen der mindestens eine Transistor (T1 und/oder T4) blockiert wird, um den Strom in der mindestens einen Phase zu verändern.

8. Verfahren nach Anspruch 7, wobei die induzierte Spannung während jeder Zeitspanne (ON), wenn die Phase betrieben wird, und während jeder Zeitspanne (OFF), wenn der Transistor blockiert wird, gemessen wird, wobei das Verfahren weiter einen Schritt des Berechnens des Unterschieds der induzierten Spannung, die während jeder der Zeitspannen (ON und OFF) gemessen wird, aufweist.

9. Verfahren nach einem der Ansprüche 1 bis 8, wobei der Motor (2) von einer Schaltschaltung (1) betrieben wird, die einen Dreiphasenbrücke mit sechs Transistoren (T1 bis T6) aufweist.

10. Verfahren nach einem der Ansprüche 1 bis 2, wobei der Motor (2) ein Zweiphasenmotor ist, wobei die Spannung und/oder der Strom an eine betriebene Phase des Motors angelegt wird, wobei die induzierte Spannung in der unbetriebenen Phase des Motors gemessen wird.

11. Verfahren nach einem der Ansprüche 1 bis 10, aufweisend einen Schritt des Bestimmens des Moments, wenn die Phasen betrieben sind und/oder des Bestimmens des Versorgungsstroms auf der Basis der Position und/oder Geschwindigkeit.

12. Verfahren nach einem der Ansprüche 1 bis 11, wobei die Induktivität in einer ungefähr sinusförmigen Art variiert, und wobei die Position des Rotors (22) durch die Berechnung von inversen trigonometrischen Funktionen bestimmt wird.

13. Verfahren nach einem der Ansprüche 1 bis 11, wobei die Position des Rotors (22) von den Variationen der Induktivität mit Hilfe einer standardisierten Tabelle bestimmt wird.

14. Verfahren nach einem der Ansprüche 1 bis 13, aufweisend einen Schritt des Filterns oder des Absorbierens der Messung des Potentials der unbetriebenen Phase, um die mit parasitären oder Streukapazitäten verbundenen Störungen zu reduzieren.

15. Verfahren nach einem der Ansprüche 1 bis 14, aufweisend einen Schritt des Eingebens eines Hochfrequenzsignals in eine der Phasen des Motors (2) und das Messen der von dem Hochfrequenzsignal induzierten Spannung in mindestens einer anderen Phase des Motors.

16. Verfahren nach einem der Ansprüche 1 bis 15, weiter aufweisend einen Schritt der Erkennung des Nulldurchgangs der Bewegungsinduzierten Spannung, wobei das Bestimmen der Position und/oder der Geschwindigkeit sowohl auf der Messung der Induktivität zwischen den Phasen und der Detektion des Nulldurchgangs der Bewegungsinduzierten Spannung basiert.

17. Verfahren nach einem der Ansprüche 1 bis 16, aufweisend einen Schritt des Bestimmens der Sättigung ferromagnetischer Elemente des Motors, wobei diese Information für die Bestimmung der Position und/oder der Geschwindigkeit benutzt wird.

18. Verfahren nach einem der Ansprüche 1 bis 17, aufweisend einen Schritt des Variierens der gegenseitigen Induktivität und/oder der Eigeninduktivität in Abhängigkeit von der Intensität des Stroms.

19. Anordnung zum Bestimmen der Position eines Rotors und zum Betreiben eines bürstenlosen Motors oder eines Schrittmotors (2), aufweisend:

eine Schaltschaltung (1) zum selektiven und abwechselnden Betreiben einer oder mehrerer Phasen (L1, L2, L3) des Motors mit einer Spannung und/oder einem Strom aufweisend eine Hochfrequenzkomponente;
einen Spannungsdetektor zum Messen der Spannung (U3), die aufgrund einer wechselseitigen Induktivität mit den betriebenen Phasen in der unbetriebenen Phase induziert wird, und für das Erzeugen eines für die induzierten Spannung repräsentativen Signals;
wobei der Detektor ausgebildet ist, die von wechselseitiger Induktivität induzierten Spannung (U3) zu zwei unterschiedlichen Zeitpunkten (ON, OFF) zu messen, und den Unterschied zwischen der induzierten Spannung zwischen den zwei Zeitpunkten zu berechnen, wobei die induzierte Spannung (u3) ein erstes Mal während einer Zeitspanne (ON), wenn die Spannung an der betriebenen Phase oder den betriebenen Phasen (L1, L2) angelegt wird, und ein zweites Mal während einer Zeitspanne (OFF), wenn die an der betriebenen Phase oder an den betriebenen Phasen (L1, L2) angelegte Spannung geändert wird, gemessen wird,
eine Verarbeitungsschaltung ausgebildet zum Berechnen der momentanen Position und/oder Geschwindigkeit des Rotors auf der Basis des Signals.

20. Anordnung nach Anspruch 19, wobei die Verarbeitungsschaltung ausgebildet ist, das Verfahren nach einem der Ansprüche 1 bis 18 zu implementieren.

21. Computerdatenträger aufweisend ein Computerprogram, das von einem Prozessor ausgeführt werden kann, um das Verfahren nach einem der Ansprüche 1 bis 18 auszuführen.

**Claims**

1. Method for determining the position and/or the speed of a rotor (22) in a brushless motor (2) or stepper motor, having the following steps:

   applying a voltage and/or of a current in at least one powered phase (L1, L2) of the motor (2);
   measuring in an unpowered phase (L3) of the motor the induced voltage ($u_3$) by mutual inductance between phases;
   determining said position and/or speed of the rotor from said induced voltage,

   comprising a step of measuring said voltage ($u_3$) induced by mutual inductance at two different instants (ON, OFF), and a step of calculating the difference of induced voltage between said two instants,
   wherein said induced voltage ($u_3$) is measured a first time during a period (ON) when said voltage is applied to the powered phase or phases (L1, L2), and a second time during a period (OFF) when the voltage applied to the powered phase or phases (L1, L2) is modified.

2. The method of claim 1, having a step of determining the mutual inductance between the powered phase or phases and the unpowered phase, wherein the instantaneous position of the rotor is determined from said mutual inductance.

3. The method of one of the claims 1 to 2, wherein said motor (2) is a three-phased motor,
   wherein said voltage and/or current is applied simultaneously at each instant to said two powered phases of the motor, wherein the induced voltage is measured in the third, unpowered phase of the motor.

4. The method of claim 5, wherein said induced voltage ($u_3$) is measured between said unpowered phase (L3) and neutral (N) or a virtual neutral.

5. The method of one of the claims 3 or 4, including:

   a) the application of said voltage and/or of said current to a first pair of phases (L1, L2) and the measurement, in the third, unpowered phase (L3) of the motor, of the voltage induced by mutual inductance;
   b) the application of a second voltage and/or of a second current to said first pair of phases and the measurement, in said unpowered phase of the motor, of the voltage induced by mutual inductance;
   c) determining said position of the rotor from said induced voltage in said unpowered phase during the steps a) and b).

6. The method of one of the claims 3 or 4, including:

   a) the application of said voltage and/or of said current to a first pair of phases (L1, L2) and the measurement, in the third, unpowered phase (L3) of the motor, of the voltage induced by mutual inductance;
   b) the application of a second voltage and/or of a second current to a second pair of phases and the measurement, in the unpowered phase of the motor, of the voltage induced by mutual inductance;
   c) determining said position of the rotor from said induced voltage in said unpowered phase during the steps a) and b).

7. The method of one of the claims 1 to 6, wherein said voltage and/or said current is pulse-width modulated (PWM) with periods (ON) during which at least one phase is powered through at least one transistor (T1 and T4) and periods (OFF) during which at least one said transistor (T1 and/or T4) is blocked so as to modify the current ($i_{ph1}$; $i_{ph2}$) in said at least one phase.

8. The method of claim 7, wherein said induced voltage is measured during each period (ON) when said phase is powered and during each period (OFF) when said transistor is blocked, wherein the method includes a step of calculating the difference of induced voltage measured during each of said periods (ON and OFF).

9. The method of one of the claims 1 to 8, wherein said motor (2) is powered by a switch circuit (1) comprising a three-phased bridge with six transistors (T1 à T6).

10. The method of one of the claims 1 to 2, wherein said motor (2) is a two-phased motor,
said voltage and/or said current being applied to a powered phase of the motor,
the induced voltage being measured in the unpowered phase of the motor.

11. The method of one of the claims 1 to 10, comprising a step of determining the instants when the phases are powered and/or determining the supply current according to said position and/or speed.

12. The method of one of the claims 1 to 11, wherein said mutual inductance varies in an approximately sine curve-shaped manner,
and wherein the position of said rotor (22) is determined by calculating inverse trigonometric functions.

13. The method of one of the claims 1 to 11, wherein the position of said rotor (22) is determined from the variations of said mutual inductance with the aid of standardized tables.

14. The method of one of the claims 1 to 13, having a step of filtering or absorbing the measurement of the potential of the unpowered phase in order to reduce the disturbances linked to parasitic/stray capacitances.

15. The method of one of the claims 1 to 14, comprising a step of injecting a high-frequency signal on one of the phases of the motor (2) and the measurement of the voltage induced by said high-frequency signal on at least one other phase of said motor.

16. The method of one of the claims 1 to 15, further having a step of detecting the zero crossing of the movement-induced voltage, wherein determining said position and/or said speed is based both on the measurement of said mutual inductance between phases and on said detection of the zero crossing of the movement-induced voltage.

17. The method of one of the claims 1 to 16, having a step of determining the saturation of the ferromagnetic elements of the motor, this information being used for determining said position and/or said speed.

18. The method of one of the claims 1 to 17, having a step of determining the variation of mutual and/or self inductances depending on the intensity of the current.

19. Arrangement for determining the position of a rotor and for powering a brushless or stepper motor (2), having:

a switch circuit (1) for selectively and alternatively powering one or several phases (L1, L2, L3) of said motor with a voltage and/or a current comprising a high-frequency component;
a voltage detector for measuring the voltage ($U_3$) induced in an unpowered phase (L3) by reason of the mutual inductance with the powered phases, and for generating a signal representative of said induced voltage;

wherein said detector is arranged for measuring said voltage ($u_3$) induced by mutual inductance at two different instants (ON, OFF),
and for calculating the difference of induced voltage between said two instants, wherein said induced voltage ($u_3$) is measured a first time during a period (ON) when said voltage is applied to the powered phase or phases (L1, L2), and a second time during a period (OFF) when the voltage applied to the powered phase or phases (L1, L2) is modified,

a processing circuit arranged for calculating the rotor's instantaneous position and/or speed from said signal.

20. The arrangement of claim 19, wherein said processing circuit is arranged for implementing the method of one of the claims 1 to 18.

21. Computer data carrier containing a computer program that can be executed by a processor to execute the method of one of the claims 1 to 18.

Fig. 1

Fig. 2

Fig. 3

Fig. 4b

Fig. 4a

Fig. 5

EP 2 471 171 B1

Fig. 6

i1

u3

Fig. 7

Fig. 8

Fig. 9

Fig. 10

Fig. 11

time [ms]

L 23-1
L 31-2
L 12-3

Fig. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6555977 B
- US 5448149 A
- US 4450396 A
- EP 2036197 A